# EUROPEAN PATENT APPLICATION

(11) **EP 0 719 496 A2**
(43) Date of publication of application: **03.07.1996**
(21) Application number: 95119777.1
(22) Date of filing: 15.12.1995
(51) Int. Cl.: A01K 1/01

(54) **Pet toilet and toilet sand used therefor**

(30) Priority: 28.12.1994 JP 327059/94
(71) Applicant: BIS Corporation, Tokyo 110 (JP)
(72) Inventor: Kato, Makoto, Tokyo 125 (JP)
(74) Representative: LOUIS, PÖHLAU, LOHRENTZ & SEGETH

(57) **Abstract**

A sand container 7 made of paper is taken out from a storage space and flaps 8 and 9 of the container 7 are opened and folded outwardly. Then, the container 7 is fitted into a container holder 17 and its flaps 8 and 9 are pressingly held by a stopper frame 20. Thus, a pet toilet is provided by which excreta of a pet can be disposed with no dirty work. Toilet sands are pellets made of ground material from or burned ash from vegetative organic substance such as paddy husk or sawdust.

## Description

### BACKGROUND OF THE INVENTION

The present invention relates to a pet toilet and toilet sands used therefor.

With respect to keep pets such as cats and dogs in houses, there are increasing demands for pet toilets, using together with granular pellets (herein referred to as "toilet sands").

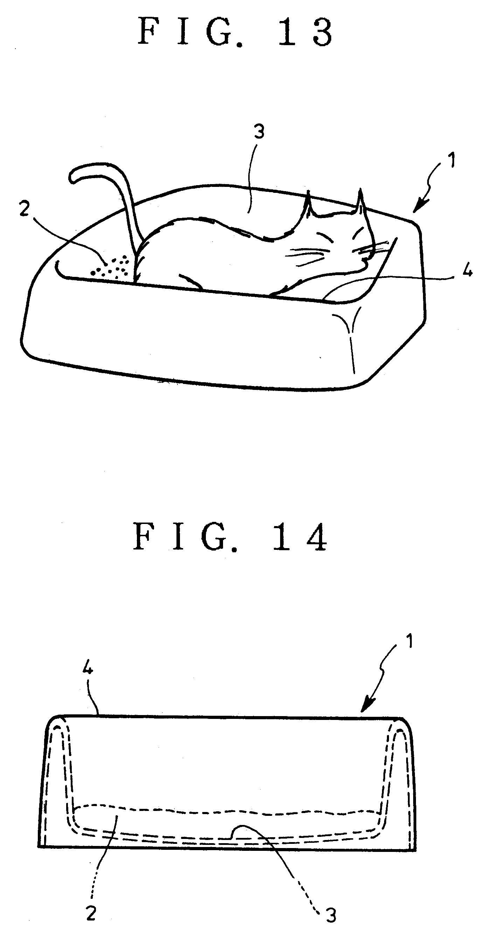

Figs. 13 and 14 illustrate a conventional pet toilet 1 which is a bowl made from plastic and having a sheer and narrow wall-like periphery 4 to define a central concavity 3 for receiving toilet sands 2.

A pet owner purchases a bag or bags of toilet sands 2 each weighing about 5 to 10kg and takes the sands out from the bag by a predetermined quantity into the concavity 3 of the toilet 1.

A pet such as cat or dog may pass over the periphery 4 to enter into the toilet 1 and excrete on the sands 2, as need arises.

After excretion of the pet, the pet owner takes some of the sands 2 dirtied with the pet's dung and urine out of the toilet 1 and supplies any supplementary sands 2.

Commercially available toilet sands 2 are, in general, made of minerals such as zeolite or made of water-absorptive pulp in the form of pellets.

The above-mentioned conventional pet toilets, however, have problems.

Since the toilet sands 2 have been directly received in the toilet 1, the owner may unsanitarily touch the pet's excreta by his or her hands upon disposal of the dirtied sands 2 of the toilet 1. Moreover, such disposal work itself is troublesome and time-consuming.

Furthermore, the pet may scratch the sands 2 by its paws or hind feet onto the excreta, which habitual behavior will tend to cause some of the scratched sands 2 to be thrown out of the toilet 1.

### BRIEF SUMMARY OF THE INVENTION

The present invention was made in view of the above problems in the prior art and has its object to provide a pet toilet in which excreta can be readily disposed with no dirty work.

The invention is directed to a pet toilet which comprises a sand container with flaps for selective opening and closing, said container being adapted to receive an amount of toilet sands necessary for one or more excretion actions, and a container holder having a concavity for accommodation of the container and a periphery with a zone for preventing the sands from being thrown out of the holder.

The zone may be provided by slopes extending from the periphery and descending toward the concavity.

The periphery of the holder may further have a wall for preventing the sands from being thrown out of the holder.

Toilet sands for the pet toilet may be pellets made of ground material from or burned ash from vegetative organic substance such as paddy husk or sawdust.

Mode of operation of the present invention will be described.

A pet owner takes out a sand container from a storage space, opens the flaps of the container and then fits the container into a concavity of a container holder. By such procedures, the setting work is completed simply.

In the case where the container is not preliminarily packed with toilet sands, the pet owner charges toilet sands by a predetermined quantity into the container.

Then, as need arises, a pet such as cat or dog may ride on the container in the toilet and excrete on the sands.

In this case, when the slopes descending toward the concavity extend from the periphery of the holder to provide the zone for preventing the sands from being thrown out of the holder, the pet will avoid the slopes and sit, for excretion, on the sands at the center of the toilet.

In the case of using, as toilet sands, pellets made of ground material from or burned ash from vegetative organic substance such as paddy husk or sawdust, the pellets are by far more water-absorptive than the conventional toilet sand materials so that they absorb the pet's urine and are hardened on the one hand, and cling to the pet's dung to completely cover the same upon the pet's sand-scratching and throwing behavior, thereby exhibiting effects of enclosing the dung and cutting off stench of the same on the other hand. The pet such as cat likes the smell of the ash and willingly accesses the toilet for excretion. Therefore, the pellets made of the burned ash are the best as toilet sands for pet toilets.

Moreover, use of the vegetative organic substance such as paddy husk or sawdust, which are being disposed as waste, as toilet sands will provide good re-use of resources and resultant toilet sands are as light in weight as about 1/7 of natural sands with the same volume. This contributes to reducing transportation cost and the like for toilet sands.

The pet may have a habit of scratching the sands to throw them over the dung for covering the same. In such a case, the zone of the periphery of the holder prevents the sands from being thrown out of the holder.

A wall may be furthermore provided on the toilet holder, which substantially completely prevents the sands from being thrown out of the toilet.

After the excretion of the pet, the pet owner takes out the used container from the holder, closes it with its flaps and seals the container. Thus, the used container is disposable as flammable waste or may be burnt for disposal.

After removal of the used container, a new container is set in the toilet holder in the manner mentioned above.

Of course, alternatively, the pet toilet according to the invention may be used as in the case of the prior art such that after excretion of the pet, the pet owner takes some of the sands dirtied with the pet's dung and urine out of the toilet and supplies any supplementary sands. Even in such a case, since the pellets of ground material from or burned ash from vegetative organic substance according to the invention is remarkably water-absorptive so that the sand-removing and replacing work is not dirty.

### BRIEF DESCRIPTION OF THE DRAWINGS

Fig. 1 is a schematic perspective view of a first embodiment of the invention;
Fig. 2 is a perspective view of a sand container;
Fig. 3 is a plan view of a stopper frame for pressingly holding the holder in position;
Fig. 4 is a partially cut-out side view of the stopper frame;
Fig. 5 is a partially cut-out side view of the stopper frame which has been fitted over the container holder;
Fig. 6 is a schematic perspective view of a sand pack as sand container according to a second embodiment of the invention;
Fig. 7 is an enlarged, schematic perspective view of heat sealed portions of the pack;
Fig. 8 is a perspective view of the sand pack with a sheet heat-adhered thereto;
Fig. 9 is a view taken along line IX-IX in Fig. 8;
Fig. 10 is a perspective view of a sand container made from plastics according to a third embodiment of the invention;
Fig. 11 is a plan view of the sand container shown in Fig. 10;
Fig. 12 is a section taken along line XII-XII in Fig. 11;
Fig. 13 is a schematic perspective view of a conventional pet toilet; and
Fig. 14 is a side view of the conventional pet toilet shown in Fig. 13.

### DETAILED DESCRIPTION OF THE PREFERRED EMBODIMENTS

Preferred embodiments of the invention will be described in conjunction with the accompanying drawings.

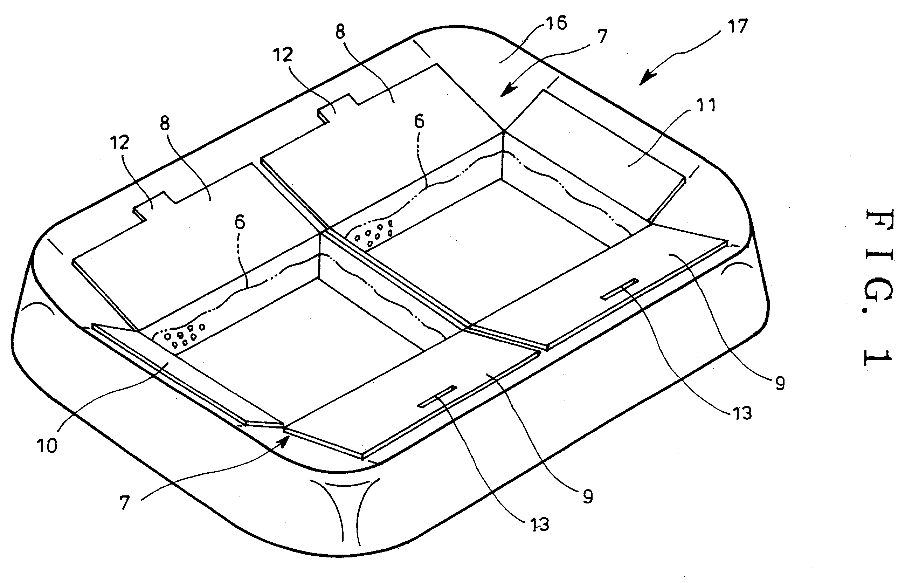

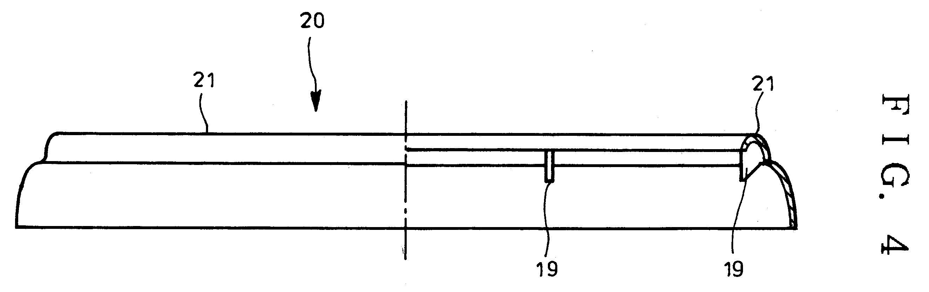

Figs. 1 to 5 illustrate a first embodiment of the invention which comprises a container 7 made of paper.

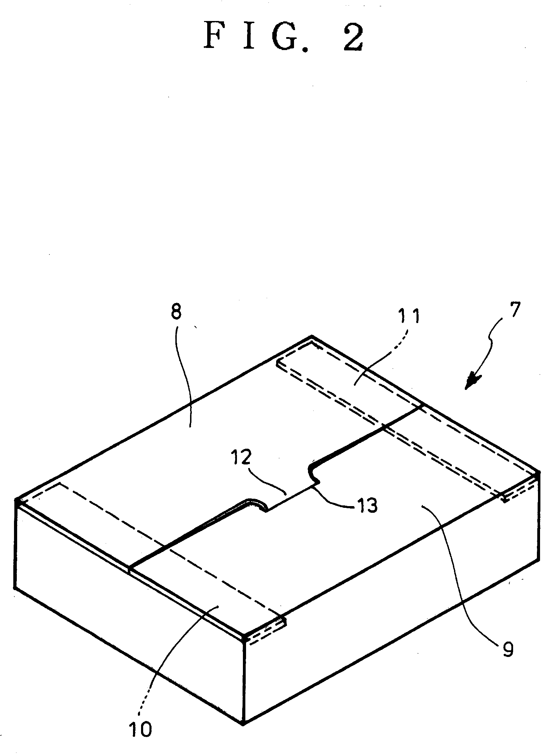

As shown in Figs. 1 and 2, the container 7 is in the shape of a flat box and is adapted to receive toilet sands for one or more excretion actions.

The container 7, which may be made of for example flammable cardboard with vinyl coating for water-resisting property, is integrally formed at its longitudinal edges with two flaps 8 and 9 which may be oppositely opened. The container 7 may be additionally and integrally formed at its transverse edges with two further inner flaps 10 and 11, if necessary.

For positive closure of the container 7, one of the flaps 8 and 9 has an insert or tongue 12 and the other has a corresponding socket or slit 13 for receiving the tongue 12.

The container 7 made of paper may be preliminarily packed with a predetermined amount of toilet sands 6. Alternatively, the container 7 may be supplied as it is with no toilet sands.

The toilet sands 6 may be pellets made of vegetative organic substance such as paddy husk or sawdust which are preferred not only in that they can be burned together with the used container 7 made of paper after excretion of the pet but also in that they are much water-absorptive and have remarkable dung-enclosing effect and the like detailed hereinafter.

Only from the viewpoint of combustibility together with the used container 7 made of paper, the toilet sands 6 may be conventionally available pellets of absorptive pulp. Of course, conventionally available porous minerals such as zeolite may be also used, although they cannot be burned after excretion of the pet.

The vegetative organic substance may be used for pet toilets by merely drying, grinding and pelletizing the same. However, since the vegetative organic substance has specific organic smell, it is better to use pellets of such substance processed as follows:

That is, the vegetative organic substance is fed by for example compressed air to an electric furnace for burning. The resultant burned ash is taken out from the furnace and is sent to a pelletizer where it is pelletized into pellets with diameter of about 2 to 5mm. This overcomes the problem of the specific organic smell and improves convenience in use.

The burned ash has specific fragrance. It was experimentally verified that pet such as cat likes the fragrance of the ash and willingly accesses pellets of the ash as toilet sands to excrete thereon. It is therefore noted that the burned ash of vegetative organic substance is the best material for toilet sands 6 of a pet toilet.

A small amount of odor-adsorptive and antibacterial material such as activated charcoal may be added to the toilet sands 6.

High-molecular water-absorptive agent or water-absorptive coagulating agent may be also added to the toilet sands 6.

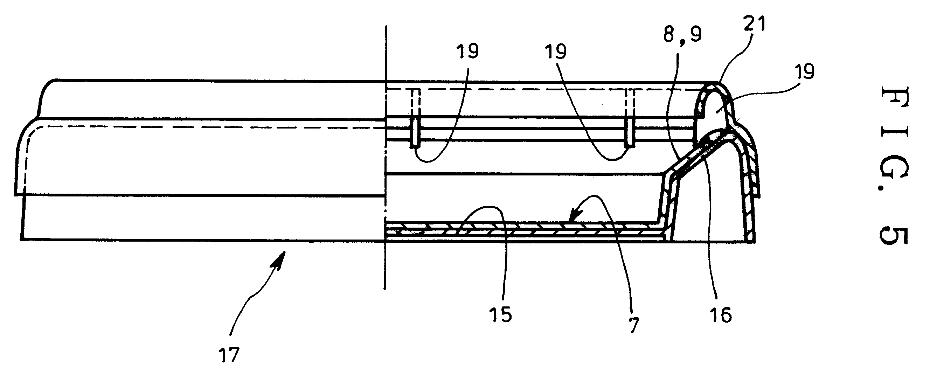

As shown in Figs. 1 and 5, a container holder 17 is in the shape of bowl and has a central concavity 15 for accommodation of the above-mentioned sand container 7 made of paper and a zone 16 for preventing the sands 6 from being thrown out of the holder 17 at its periphery.

The zone 16 is provided by slopes which extend from the periphery of the holder 17 and descend toward the concavity 15.

According to this embodiment, the holder 17 is made from plastic and is sized to accommodate two containers 7.

Alternatively, the holder 17 may be sized to accommodate only one container 7 or more than two containers 7.

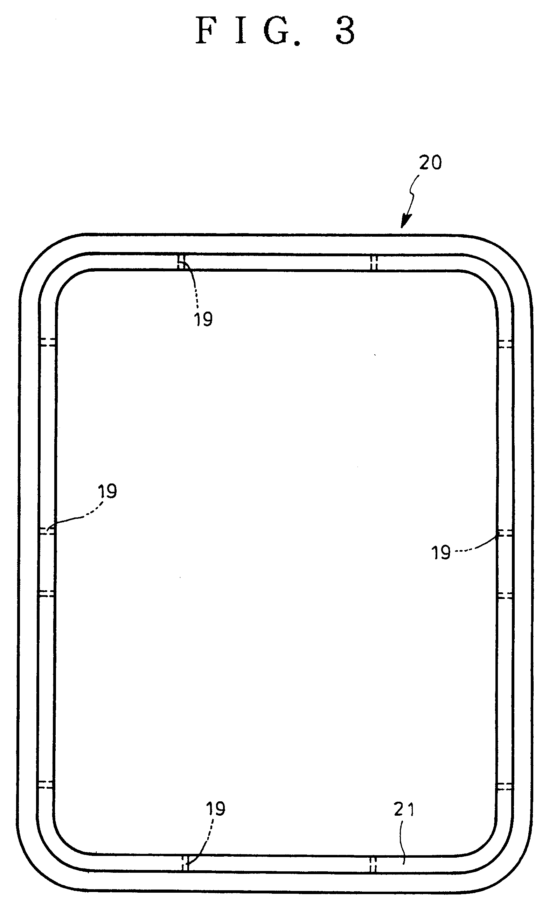

As shown in Figs. 3 and 5, a stopper frame 20 with inner ribs 19 is fitted over the periphery of the holder 17 so as to pressingly hold in position the flaps 8 and 9 and, if any, the inner flaps 10 and 11 by means of the ribs 19. The frame 20 has at its top a wall 21 which circumferentially extend to prevent the sands 6 from being thrown out of the holder 17.

Next, the mode of operation will be described.

The pet owner takes out a sand container 7, which has been preliminarily charged with toilet sands 6, from a storage space and opens the flaps 8 and 9 and, if any, the inner flaps 10 and 11. With the flaps being folded outwardly, the owner fits the container 7 into the concavity 15 of the holder 17 and then fits the stopper frame 20 over the periphery of the holder 17 to pressingly hold the flaps 8 and 9 and, if any, the inner flaps 10 and 11 by means of the ribs 19 provided on the inner periphery of the frame 20.

According to this embodiment, two sand containers 7 are set in the container holder 17 in this manner. The adjacent inner flaps 10 and 11 of the containers 7 are, if any, folded down between the containers 7.

With above procedures, setting work is completed simply.

In the case where the containers 7 are not preliminarily packed with toilet sands, the pet owner charges toilet sands 6 by a predetermined quantity into the containers 7.

Then, as need arises, a pet such as cat or dog may ride on either of the containers 7 in the holder 17 and excrete on the sands 6.

Since the slopes descending toward the concavity 15 extend from the periphery of the holder 17 to provide the zone 16 for preventing the sands 6 from being thrown out of the holder 17, the pet will avoid the slopes and sit, for excrement, on the sands 6 at the center of the toilet. The pet will also avoid an interface between the containers 7 since there is some step between the edge of the interface and the toilet sand.

The toilet sands 6 to be used may be pellets of ground material from or burned ash from vegetative organic substance such as paddy husk or sawdust. They are highly water-absorptive so that they absorb the pet's urine and are hardened on the one hand, and cling to the pet's dung to completely cover the same upon the pet's sand-scratching and throwing behavior, thereby exhibiting effects of enclosing the dung and cutting off stench of the same on the other hand.

The pet such as cat likes the smell of the ash and willingly accesses the toilet for excretion. Therefore, the pellets made of the burned ash are the best as toilet sands for pet toilets.

Moreover, use of the vegetative organic substance such as paddy husk or sawdust, which are being disposed as waste, as toilet sands will provide good re-use of resources and resultant toilet sands are as light in weight as about 1/7 of natural sands with the same volume. This contributes to reducing transportation cost and the like for toilet sands.

Apart from these remarkable effects of the toilet sands according to the invention, conventionally available pellets of water-absorptive pulp or porous mineral such as zeolite may be also used as toilet sands 6.

Additionally, a small amount of odor-adsorptive and antibacterial material such as activated charcoal may be added to the toilet sands 6 so as to enhance the anti-odor capability. High-molecular water-absorptive agent or water-absorptive coagulating agent may be also added to the toilet sands 6 so as to enhance water-absorbability.

The pet may have a habit of scratching the sands 6 to throw them over the dung for covering the same. In such a case, the zone 16 of the periphery of the holder 17 prevents the sands 6 from being thrown out of the holder 17.

Furthermore, the wall 21 provided at the top of the stopper frame 20 substantially completely prevents the toilet sands 6 from being thrown out of the toilet.

After the excretion of the pet, in procedures substantially reverse to the above, the pet owner detaches the stopper frame 20, takes out the used container 7 from the holder 17, closes it with its inner flaps 10 and 11, if any, and with the flaps 8 and 9 and seals the container 7. Thus, the used container 7 is disposable as flammable waste or may be burnt for disposal.

After removal of the used container 7, a new container 7 is set in the toilet holder 17 in the manner mentioned above.

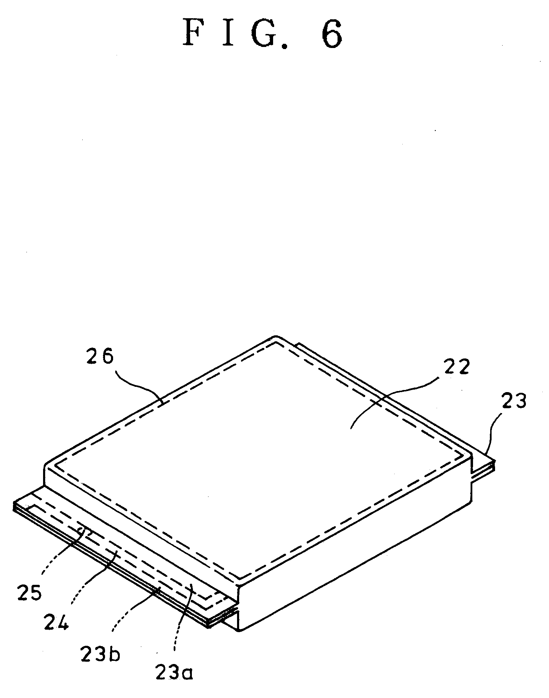

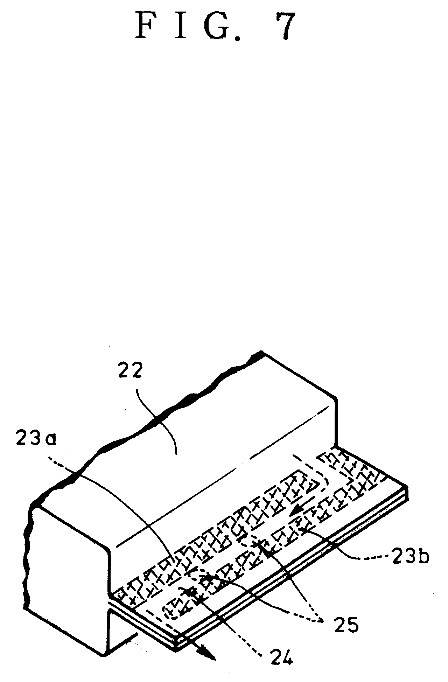

Figs. 6 to 9 illustrate a second embodiment of the invention in which a sand pack 22 made from plastic film is used as sand container.

The sand pack 22 comprises a tube made of oriented polypropylene (OPP) with or without aluminum coating, said tube being charged with toilet sands 6 such as pellets of ground material from or burned ash from vegetative organic substance and being heat-sealed at its opposite ends to have heat-sealed portions 23, 23a and 23b.

It is preferred that the sand pack 22 is provided in the state of reduced volume by for example deaeration. For this purpose, one of the heat seals at the opposite ends is composed by the heat-sealed portions 23a and 23b to provide an air passage 24 for communication of an inner space in the pack 22 with surrounding atmosphere. Since the passage 24 have one or more drops of grease 25 therein, the air in the pack 22 can be discharged by pushing the pack 22 while inflow of the air into the pack 22 after the deaeration can be prevented by the grease.

For facilitation of unsealing upon use, the pack 22 may be rouletted or otherwise weakened along the line 26.

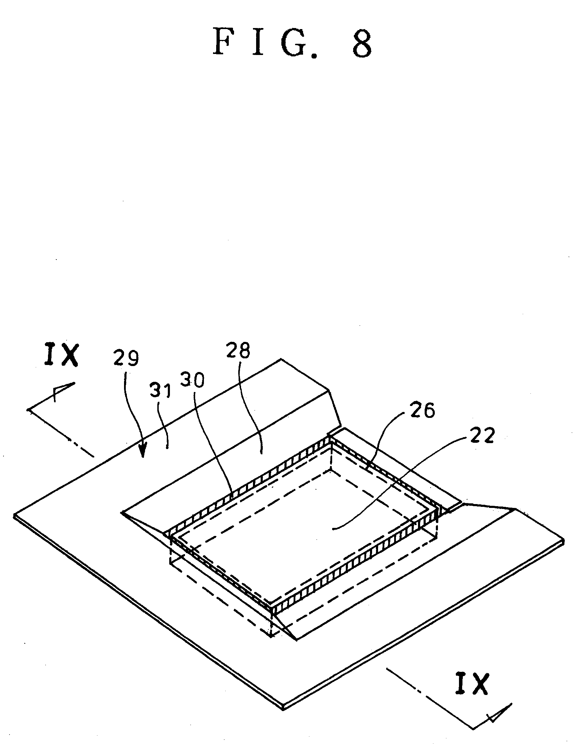

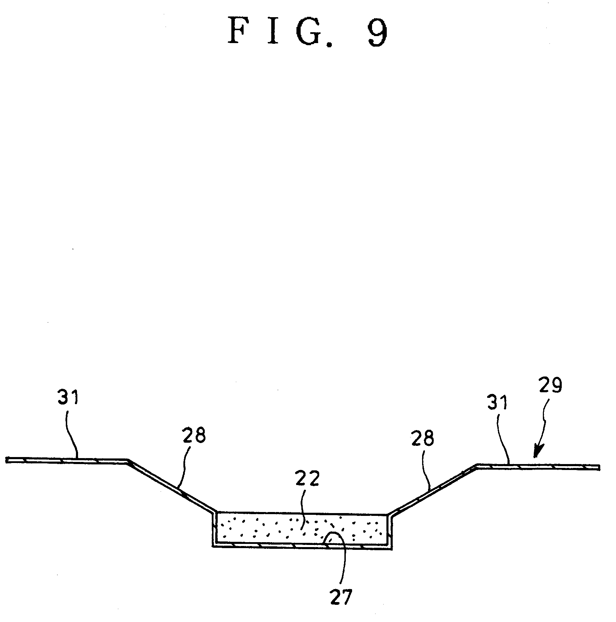

As shown in Figs. 8 and 9, a polyethylene or the like plastic film sheet 29 is interposed between the sand pack 22 and the container holder 17. The sheet 29 has a concavity 27 for accommodation of the sand pack 22 and slopes 28 around the concavity 27 and corresponding to the zone 16 for preventing the sands 6 from being thrown out of the toilet.

The sheet 29 may be provided separately from the sand pack 22. Alternatively, the sheet 29 may be made integral with the pack 22 for example through thermal adhesion at 30. In this embodiment, the sheet 29 has the slopes 28 and the peripheral skirt 31 only in three directions among the four directions since two sand packs 22 are accommodated in the holder 17. However, the sheet 29 is not limited to such a shape.

In a setting work, the sheet 29 is put on the holder 17 with the concavity 27 and slopes 28 of the sheet 29 being aligned with the concavity 15 and zone 16 of the holder 17. The stopper frame 20 is fitted to pressingly hold the peripheral skirt 31 of the sheet 29. Then, the sand pack 22 made from for example OPP film is fitted into the concavity 27 of the sheet 29 and the pack 22 is opened along the weakened line 26. Thus, the toilet is instantly usable since the sand pack 22 made of OPP film is relatively stiff and has high tendency of retaining its form.

In the case of the sheet 29 and sand pack 22 being integral for example through thermal adhesion, the sand pack 22 is also set in the operation of setting the sheet 29 on the holder 17.

After the excretion of the pet, the sand pack 22 may be crumpled up and disposed as flammable waste.

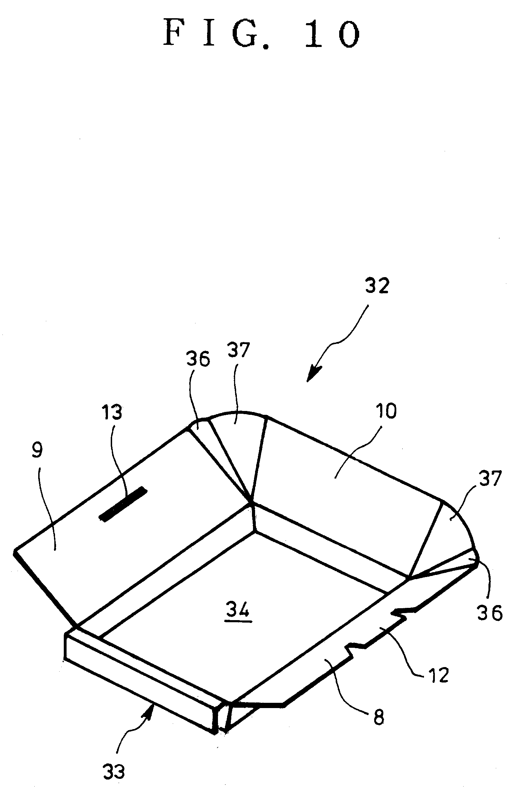

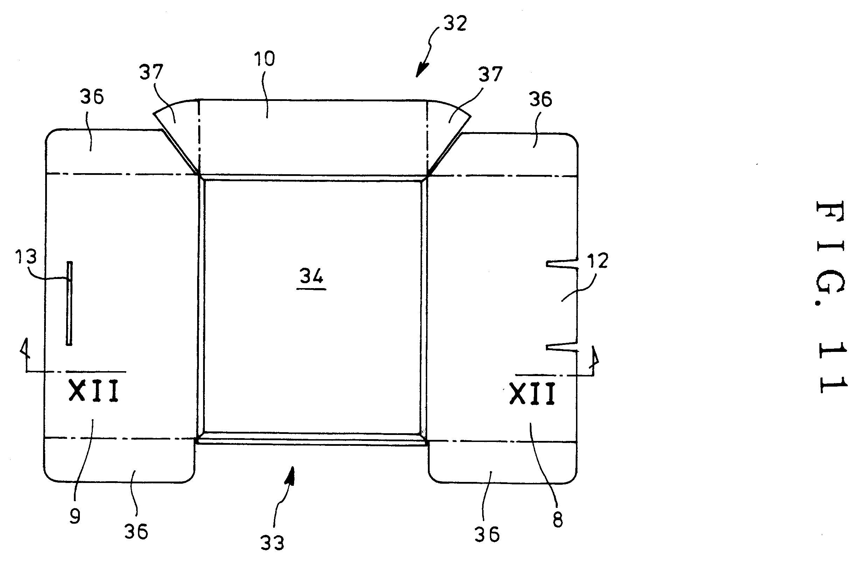

Figs. 10 to 12 illustrate a third embodiment of the invention in which a sand container 32 is provided by molding plastic usable for food container such as polystyrene into the container 32 having a body 33, flaps 8 and 9, an inner flap 10 integral with each other.

The container 32 is directly produced by monolithic molding so that production cost is lower than that of the container 7 made of paper which requires assembling process, and that of the sand pack 22 which requires heat sealing installation.

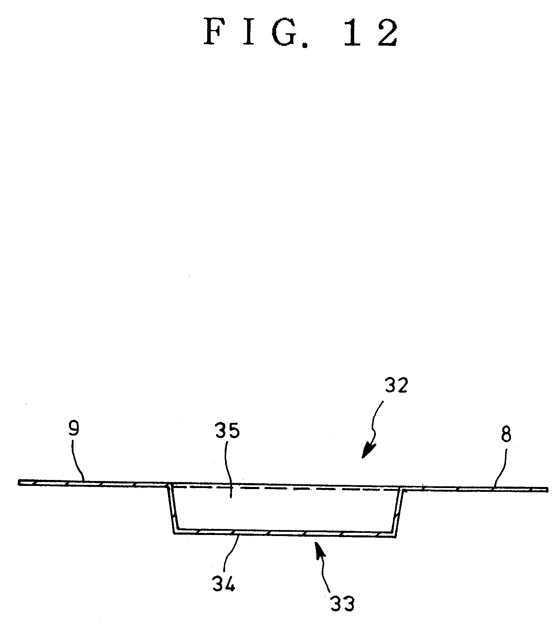

As shown in Fig. 12, the container 32 may be designed to be reverse trapezoid in vertical section so that a bottom surface 34 of the body 33 is smaller in area than an opening 35 of the body 33. Then, empty containers 32 may be stored in nested manner.

Reference numerals 36 and 37 denote ears of the flaps 8, 9 and 10. When the flaps 8, 9 and 10 are leaned against the slopes 28 of the zone 16, the ears 36 and 37 of the flaps are partly overlapped with each other.

Setting procedures or the like of the container 32 are substantially the same as those of the container 7 made of paper.

After the excretion of the pet, the used container 32 may be crumpled up and disposed as flammable waste.

It is to be understood that the present invention is not limited to the embodiments described above and that various modifications may be made without departing from the true spirit and scope of the invention.

As described above, the present invention exhibits an excellent effect that excreta of a pet can be readily disposed with no dirty work.

## Claims

1. A pet toilet comprising a sand container with flaps for selective opening and closing, said container being adapted to receive an amount of toilet sands necessary for one or more excrement actions, and a container holder having a concavity for accommodation of the container and a periphery with a zone for preventing the sands from being thrown out of the holder.

2. The pet toilet according to claim 1, wherein the zone is provided by slopes extending from the periphery and descending toward the concavity.

3. The pet toilet according to claim 1, wherein the periphery of the holder further has a wall for preventing the sands from being thrown out of the holder.

4. The pet toilet according to claim 2, wherein the periphery of the holder further has a wall for preventing the sands from being thrown out of the holder.

5. Toilet sands for the pet toilet comprising pellets made of ground material from or burned ash from vegetative organic substance such as paddy husk or sawdust.
